# EUROPEAN PATENT SPECIFICATION

(11) **EP 3 095 655 B1**
(45) Date of publication and mention of the grant of the patent: **04.07.2018**
(21) Application number: 16160895.5
(22) Date of filing: 17.03.2016
(51) Int. Cl.: B60T 17/00

(54) **A METHOD FOR CONTROLLING AN AIR DRYER DEVICE**
VERFAHREN ZUR STEUERUNG EINER LUFTTROCKNERVORRICHTUNG
PROCÉDÉ POUR COMMANDER UN DISPOSITIF DE SÉCHAGE À L'AIR

(30) Priority: 30.03.2015 SE 1550374
(43) Date of publication of application: 23.11.2016
(73) Proprietor: Scania CV AB, 151 87 Södertälje (SE)
(72) Inventor: JEDDI-TEHRANI, Hossein, 126 34 Hägersten (SE)
(74) Representative: Scania CV AB

(56) References cited:
- US-A- 4 331 457
- US-A- 6 125 553
- US-A1- 2003 183 077

## Description

### TECHNICAL FIELD

The invention relates to a method for controlling an air dryer device according to the preamble of claim 1. The invention also relates to a system for controlling an air dryer device. The invention also relates to a vehicle. The invention also relates to a computer program and a computer program product.

### BACKGROUND ART

Vehicles such as heavy vehicles are usually equipped with a so called air processing system to which compressed air is distributed by means of a compressor operated by a drive member such as a combustion engine, an electric motor or the like. The air processing system is arranged to distribute compressed air to e.g. the air suspension system and the brake system of the vehicle. The air processing system comprises an air dryer for drying and filtering the air from particles from e.g. oil from the engine. The compressor is connected to the air dryer via a feeding line. The air dryer comprises a desiccant cartridge and a support member having a purge valve for venting air during regeneration of the cartridge when the compressor is deactivated.

By having an air dryer with two cartridges, one of said cartridges being connected to the compressor via the feeding line and the other to said purge valve regeneration can be performed for one cartridge without the need of deactivating the compressor. The connection of the cartridges can be switched. An air dryer with two cartridges and a purge valve takes up more space and is further more expensive than an air dryer with one cartridge.

By designing the air dryer having two cartridges without the purge valve and only an outlet connected to the atmosphere a less expensive and more compact two-cartridge air dryer is facilitated. For such a design the feeding line connecting the compressor and one of the cartridges will remain pressurised when the compressor is deactivated. This will cause problems when the compressor is to be activated, particularly for a compressor being connected to the drive member, e.g. the combustion engine, by means of a clutch arrangement, causing wear of the compressor decreasing the life expectancy of the compressor and risking of damaging the compressor.

US5604991 and US4331457 discloses devices for switching such that air goes through one of the cartridges or the other one of the cartridges for air dryers with two cartridges.

### OBJECTS OF THE INVENTION

An object of the present invention is to provide a method and a system for controlling an air dryer device of an air pressure system which cost efficiently reduces wear of the compressor for an air pressure system having an air dryer with two cartridges.

### SUMMARY OF THE INVENTION

These and other objects, apparent from the following description, are achieved by an arrangement and a vehicle as set out in the appended independent claims. Preferred embodiments of the arrangement are defined in appended dependent claims.

Specifically an object of the invention is achieved by a method for controlling an air dryer device of an air pressure system. Said air dryer device is configured to dry compressed air from a compressor operable by means of a drive member. Said air dryer comprises a first and second air dryer cartridge and an outlet for venting air. One of said cartridges is connected to the compressor via a feeding line and the other of said cartridges is connected to said outlet. The method comprises the step of: prior to activating the compressor, shifting the connection between said cartridges at least once by connecting the cartridge connected to the compressor to the outlet and the cartridge connected to the outlet to the compressor such that the pressure in said feeding line is reduced. Hereby wear of the compressor when activated, e.g. engaged by means of a clutch arrangement to the drive member, is reduced. Thus this facilitates utilizing a cost efficient and compact air dryer device with two cartridges, i.e. without any purge valve, without risking reducing the life expectancy of the compressor or damaging the compressor.

According to the invention the step of shifting is performed until the pressure in the feeding line is reduced to a certain level. Hereby the pressure may be reduced to a pressure not risking wear of the compressor when activated, e.g. engaged by means of a clutch arrangement, to the drive member.

According to an embodiment of the method said shifting is performed based upon an original pressure in said feeding line and relevant volumes connected to said feeding line in order to reach said certain reduced pressure level. Hereby the number of shifts in order to reach the certain reduced pressure level may be predetermined without needing to determine the pressure in the feeding line by means of a pressure sensor or the like, thus facilitating a cost efficient solution.

According to an embodiment the method comprises the step of determining the pressure in said feeding line as a basis for said shifting in order to reach said certain reduced pressure level. Hereby an efficient and accurate way of determine when the certain reduced pressure in the feeding line has been reached. The above mentioned predetermination of the number of shifts and this way of determining the certain reduced pressure by means of a pressure sensor or the like may be used as redundancy.

According to an embodiment of the method the cartridge connected to said outlet is connected to atmospheric pressure via said outlet. Hereby the cartridge connected to the outlet will have atmospheric pressure when connection is shifted such that it is connected to the compressor, thus facilitating pressure reduction in the feeding line.

Specifically an object of the invention is achieved by a system for controlling an air dryer device of an air pressure system adapted to perform the methods as set out above.

The system according to the invention has the advantages according to the corresponding method.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle according to the present invention;
Fig. 2 schematically illustrates a drive member operating a compressor connected to an air processing system of a vehicle;
Fig. 3 schematically illustrates an air processing system of a vehicle according to an embodiment of the present invention;
Fig. 4a schematically illustrates a side view of an air dryer device with two cartridges in a first connection mode according to an embodiment of the present invention;
Fig. 4b schematically illustrates a side view of the air dryer device in fig. 4a in a second connection mode according to an embodiment of the present invention;
Fig. 5 schematically illustrates a system for controlling an air dryer device of an air pressure system according to an embodiment of the present invention;
Fig. 6 schematically illustrates a block diagram of a method for controlling an air dryer device of an air pressure system according to an embodiment of the present invention; and
Fig. 7 schematically illustrates a computer according to an embodiment of the present invention.

### DETAILED DESCRIPTION

Hereinafter the term "link" refers to a communication link which may be a physical connector, such as an optoelectronic communication wire, or a non-physical connector such as a wireless connection, for example a radio or microwave link.

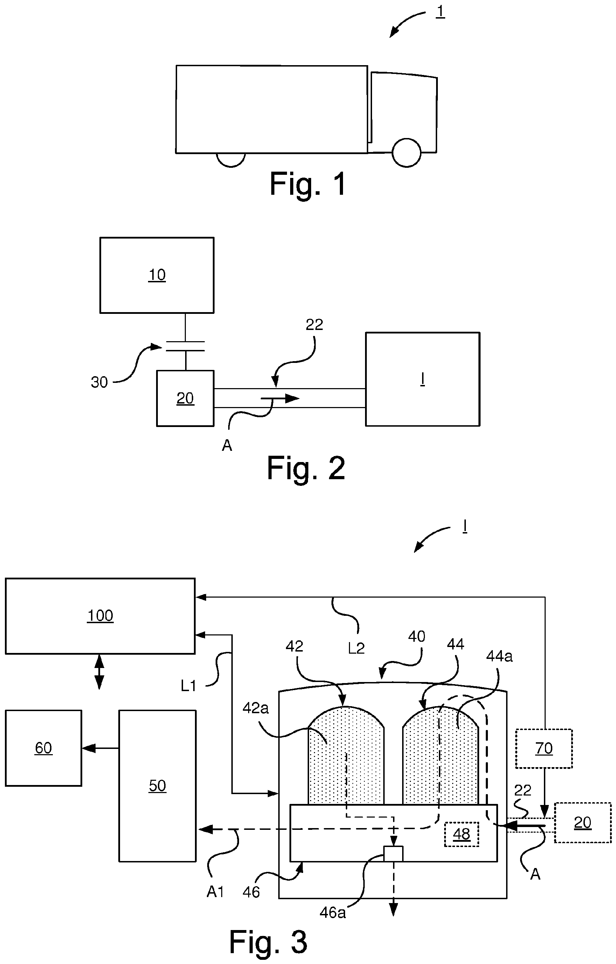

Fig. 1 schematically illustrates a side view of a vehicle 1 according to the present invention. The exemplified vehicle 1 is a heavy vehicle in the shape of a truck. The vehicle according to the present invention could be any vehicle such as a bus or a car. The vehicle comprises an air processing system having an air dryer device with two air dryer cartridges.

Fig. 2 schematically illustrates a drive member 10 operating a compressor 20 connected to an air processing system I of a vehicle, for example a vehicle 1 in accordance with the vehicle in fig. 1. The drive member 10 may be any suitable drive member 10. The drive member 10 is according to an embodiment an internal combustion engine. The drive member 10 is according to an embodiment an electric motor. The drive member 10 may according to an embodiment be an energy source such as a battery unit.

The air processing system I is configured to receive compressed air A distributed by means of the compressor 20 operated by the drive member 10. The compressor 20 is connected to the air processing system via a feeding line 22 via which said compressed air A is arranged to be fed to the air processing system I.

The compressor 20 is operably connected to the drive member 10. The compressor 20 is according to this embodiment operably connected to the drive member 10 via a clutch arrangement 30. The compressor 20 is according to an alternative embodiment connected to the drive member via a gear arrangement (not shown).

Fig. 3 schematically illustrates an air processing system I of a vehicle according to an embodiment of the present invention.

The air processing system I comprises an air dryer device 40 for drying and filtering the air from particles from e.g. oil from the engine. The air dryer device 40 comprises a first desiccant cartridge 42 and a second desiccant cartridge 44. The cartridges 42, 44 are also named air dryer cartridges 42, 44.

The air dryer device 40 further comprises a support member 46. The respective cartridge 42, 44 comprises a container portion 42a, 44a for air drying. The container portion 42a, 44a is according to an embodiment filled with a desiccant bed of silica gel balls for said air drying. The respective cartridge 42, 44 are supported by means of the support member 46. The respective cartridge 42, 44 are according to an embodiment connected to the support member by means of internal threads on each cartridge screwed onto external threads on protrusions on the support member 46. The support member 46 is according to a variant called air dryer body.

The support member 46 also comprises an outlet 46a for venting air from the cartridge connected to the outlet 46a, e.g. by regeneration where air and moist collected by the filter of a cartridge 42, 44 of the air dryer device is exhausted. The outlet 46a is connected to atmosphere and hence atmospheric pressure.

One of said cartridges 42, 44, here the second cartridge 44 is connected to the compressor 20 via a feeding line 22 and the other of said cartridges 44, 42, here the first cartridge 42 is connected to said outlet 46a. The air in the cartridge connected to the compressor 20 thus has the same pressure as the compressed air A in the feeding line 22 and hence the compressor 20. The cartridge connected to said outlet 46a is connected to atmospheric pressure via said outlet 46a. The cartridge connected to said outlet 46a thus has atmospheric pressure.

The air dryer device 40 comprises means 48 for shifting the connection between said cartridges 42, 44 by connecting the cartridge connected to the compressor 20 to the outlet 46a and the cartridge connected to the outlet 46a to the compressor 20 such that the pressure in said feeding line is reduced prior to activating the compressor 20. The means 48 for shifting the connection between the cartridges 42, 44 may comprise any suitable means for facilitating shifting said connections.

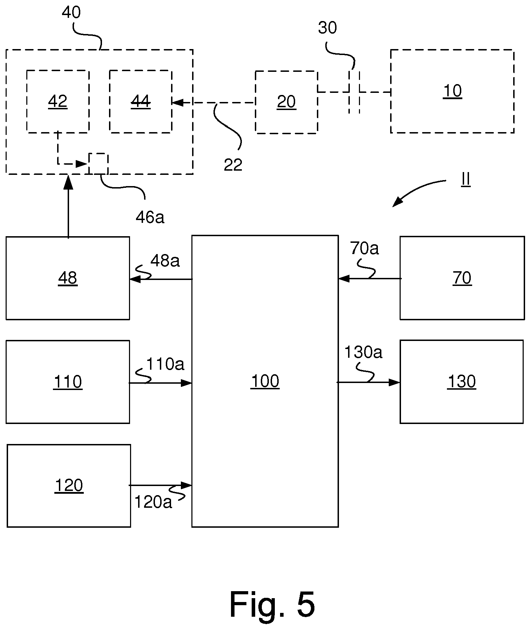

The means 48 comprises according to an embodiment a valve configuration. The valve configuration comprises according to an embodiment a solenoid valve switch and valve member connected to the first cartridge 42 and with a connection to the outlet 46a and the compressor 20, and a valve member connected to the second cartridge 44 and with a connection to the outlet 46a and the compressor 20. Each valve member is connected to the solenoid valve switch, wherein said solenoid valve switch is arranged to control the respective valve member by switching the connection to the compressor 20 and the outlet to on and off for the respective cartridge 42, 44. The solenoid switch is controlled by an electronic control unit such as the electronic control unit 100 described below and with reference to fig. 5.

The air processing system I comprises a multi circuit protection valve 50 connected to the air dryer device 40. The multi circuit protection valve 50 is configured to distribute the dried air from the air dryer device 40 via a distribution block 60 to circuits of different systems of the vehicle such as brake system and air suspension system.

The compressed air A from the compressor is thus introduced into the air dryer device 40 and is led through the container portion 44a of the cartridge 44 connected to the compressor and through the cartridge and into the support member 46. The dried air A1 is then led to the distribution block 60 via the valve 50 for distribution to air systems of the vehicle.

The air processing system I comprises an electronic control unit 100 for controlling and determining the air pressure. The electronic control unit 100 is arranged to control the air dryer device 40. The air dryer device 40 could alternatively be controlled by a separate electronic control unit.

The air processing system I comprises or constitutes a system for controlling the air dryer device 40. The electronic control unit 100 is operably connected to the air dryer device 40 via a link L1. The electronic control unit 100 is, prior to the compressor being activated, via the link L1 arranged to send a signal to the air dryer device 40 representing data for shifting the connection between said cartridges 42, 44 at least once by connecting the cartridge connected to the compressor 20 to the outlet and the cartridge connected to the outlet to the compressor 20 such that the pressure in said feeding line 22 is reduced.

By thus shifting the connection between said cartridges 42, 44 the cartridge having a pressurized volume will be connected to the atmosphere via the outlet 46a such that the air pressure within that cartridge is reduced to atmospheric pressure. The air pressure in the cartridge being connected to the compressor 20 via the feeding line 22 will increase as the pressurised air in the feeding line will flow into that cartridge such that the pressure in the feeding line 22 is reduced, the air pressure in the feeding line 22 and the cartridge now connected to the feeding line 22 will be the same and lower than the pressure originally was in the feeding line 22 and compressor 20. The reduction of the pressure in the feeding line 22 and hence the compressor depends on the volumes of the cartridge connected to the feeding line 22 and the volume of the feeding line 22. Thus, if the volume of the feeding line 22 and the cartridge connected to the feeding line 22 is the same the pressure in the feeding line 22 and hence the compressor 20 will be half of the pressure prior to the shifting of the cartridges.

According to an embodiment said shifting is arranged to be performed based upon an original pressure P1 in said feeding line 22 and relevant volumes connected to said feeding line 22, i.e. the volume of the feeding line 22 and the volume of the cartridge connected to the feeding line 22 in order to reach a certain reduced pressure level.

The system I comprises according to an embodiment means 70 for determining the pressure in the feeding line. The means 70 may comprise any suitable means for determining the pressure such as a pressure sensor unit. The electronic control unit 100 is operably connected to the means 70 via a link L2. The electronic control unit 100 is arranged to receive a signal from the means 70 representing air pressure within the feeding line 22. The electronic control unit 100 is arranged to process the pressure data from the means 70.

If the thus determined pressure is below a certain reduced pressure level the compressor may be activated, e.g. by means of a clutch arrangement such as the clutch arrangement 30 disclosed in fig. 2. The reduced pressure level should be a pressure level which does not result in substantial wear of the compressor when activated, e.g. engaged, to the drive member, e.g. combustion engine.

If the thus determined pressure is above said certain reduced pressure level the electronic control unit will send a signal to the air dryer device representing data for shifting the connection between said cartridges 42, 44 at least once by connecting the cartridge connected to the compressor 20 to the outlet and the cartridge connected to the outlet to the compressor 20 such that the pressure in said feeding line 22 is reduced. The process will be repeated until the pressure is below said certain reduced pressure.

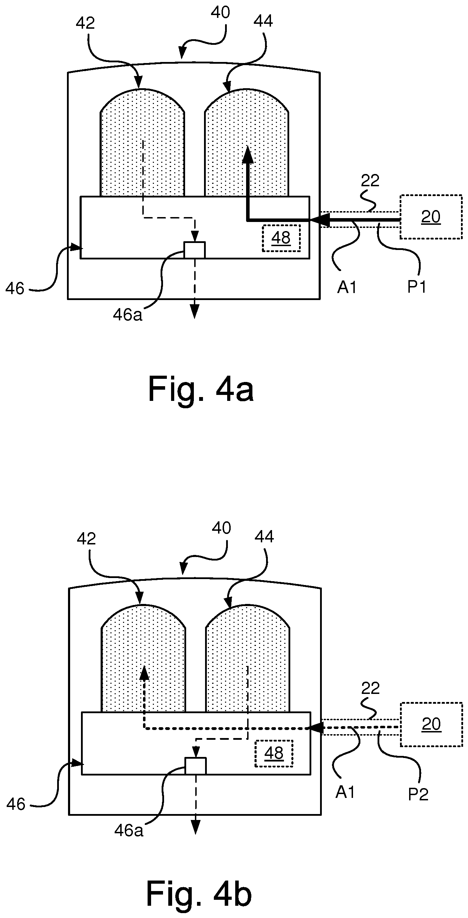

Fig. 4a schematically illustrates a side view of an air dryer device with two cartridges in a first connection mode according to an embodiment of the present invention. Here the first cartridge 42 is connected to the outlet 46a and hence to atmosphere and atmospheric pressure and the second cartridge 44 is connected to the compressor 20 via the feeding line 22. The compressor is in this state deactivated, e.g. by disengaging the compressor 20 from the drive member, e.g. the combustion engine, by means of a coupling arrangement such as that illustrated in fig. 2. The pressure level P1 in the feeding line 22 here corresponds to the original pressure P1 in the feeding line 22.

Fig. 4b schematically illustrates a side view of the air dryer device in fig. 4a in a second connection mode according to an embodiment of the present invention. The connection of the first and second cartridges 42, 44 have been shifted by means of the shifting means 48, such that the second cartridge 44 is connected to the outlet 46a and hence to atmosphere and atmospheric pressure and the first cartridge 42 is connected to the compressor 20 via the feeding line 22. The compressor is deactivated. The pressure in said feeding line 22 here corresponds to a certain reduced pressure level P2 which has been reach by shifting the connection at least one time. The shifting is according to an embodiment performed based upon an the original pressure P1 in said feeding line 22 and relevant volumes connected to said feeding line 22 in order to reach said certain reduced pressure level P2. The shifting is according to an embodiment based on a determined pressure in said feeding line 22 in order to reach said certain reduced pressure level P2.

Fig. 5 schematically illustrates a system II for controlling an air dryer device 40 of an air pressure system according to an embodiment of the present invention. The air dryer device 40 corresponds to the air dryer device 40 described with reference to fig. 3, 4a and 4b. The air dryer device could have any suitable design with two cartridges.

The air dryer device 40 is configured to dry compressed air from a compressor 20 operable by means of a drive member 10. The air dryer device 40 comprises a first and second air dryer cartridge 42, 44 and an outlet 46a for venting air, one of said cartridges being connected to the compressor 20 via a feeding line 22 and the other of said cartridges being connected to said outlet 46a.

The system II comprises an electronic control unit 100 for controlling said air dryer device. The electronic control unit 100 is according to an embodiment corresponding to the electronic control unit 100 described with reference to fig. 3. The electronic control unit could alternatively be another control unit.

The system II comprises means 48 for shifting the connection between said cartridges of the air dryer 40 at least once by connecting the cartridge connected to the compressor 20 to the outlet and the cartridge connected to the outlet to the compressor 20 such that the pressure in said feeding line is reduced prior to activating the compressor.

The system comprises means 110 for determining the activation status of the compressor. The means 110 for determining the activation status may comprise any suitable detection member for detecting whether the compressor has been deactivated. The means 110 for determining the activation status of the compressor may comprise means for determining whether a clutch arrangement 30 is/has been disengaged such that the compressor is disengaged from the drive member 10, e.g. a combustion engine.

The system II comprises means 70 for determining the pressure in said feeding line as a basis for said shifting in order to reach said certain reduced pressure level. The means 70 may comprise any suitable means for determining the pressure such as a pressure sensor unit. The means 70 corresponds according to an embodiment to the means 70 described with reference to fig. 3.

The system II comprises means 120 for storing data regarding original pressure in said feeding line and relevant volumes connected to said feeding line comprising the volume of the feeding line 22 and the volume of the cartridges 42, 44. Said shifting is according to an embodiment arranged to be performed based upon said original pressure in said feeding line 22 and said relevant volumes connected to said feeding line in order to reach said certain reduced pressure level.

The system II comprises means 130 for activating the compressor 20. The means for activating the compressor 20 may comprise any suitable means. When the compressor 20 is coupled to the drive member 10 via a clutch arrangement 30 the means 130 for activating compressor comprises means for engaging the clutch arrangement 30 such that the compressor is coupled to and operated by the drive member 10. The means 130 for activating the compressor is configured to activate the compressor when the pressure in the feeding line 22 has been reduced to a certain reduced pressure level.

The electronic control unit 100 is operably connected to the means 48 for shifting the connection between said cartridges of the air dryer via a link 48a. The electronic control unit 100 is via the link 48a arranged to send a signal to the means 48 representing data for shifting the connection between said cartridges.

The electronic control unit 100 is operably connected to the means 110 for determining the activation status of the compressor via a link 110a. The electronic control unit 100 is via the link 110a arranged to receive a signal from the means 110 representing data for activation status of the compressor.

The electronic control unit 100 is operably connected to the means 120 for storing data regarding original pressure in said feeding line and relevant volumes connected to said feeding line comprising the volume of the feeding line 22 and the volume of the cartridges 42, 44 via a link 120a. The electronic control unit 100 is via the link 120a arranged to receive a signal from the means 120 representing data for original pressure and volumes connected to said feeding line so as to determine required number of shifts in order to obtain a certain reduced pressure in the feeding line 22.

The electronic control unit 100 is operably connected to the means 70 for determining the pressure in said feeding line as a basis for said shifting via a link 70a. The electronic control unit 100 is via the link 70a arranged to receive a signal from the means 70 representing air pressure data for air pressure within the feeding line connecting one of the cartridges to the compressor.

The electronic control unit 100 is operably connected to the means 130 for activating the compressor via a link 130a. The electronic control unit 100 is via the link 130a arranged to send a signal to the means 130 representing data for activating the compressor.

The electronic control unit 100 is arranged to process said data for activation status of the compressor. If it is determined that the compressor is deactivated the electronic control unit 100 is arranged to send a signal to the means 48 representing data for shifting the connection between said cartridges. The shifting by means of said means 48 is activated prior to reactivating the compressor 20. The shifting may be activated substantially immediately after the compressor has been deactivated. The shifting may be activated just before and hence in connection to the compressor 20 being activated.

The means 48 for shifting is arranged to perform the shifting of the connection of the cartridges 42, 44 until the pressure in the feeding line 22 is reduced to a certain reduced pressure level, which pressure level represents a pressure level that will minimize wear on the compressor 20 when the compressor is re-activated, e.g. engaged by means of the clutch arrangement 30 to the drive member 10.

The electronic control unit 100 is arranged to process said data for original pressure and volumes connected to said feeding line, and/or said data for air pressure within the feeding line connecting one of the cartridges to the compressor, so as to determine the required number of shifts required to reach the certain reduced pressure level in said feeding line 22 and/or to determine when the certain reduced pressure level has been reached in said feeding line 22 as a result of said shifting.

When it has been determined that the certain reduced pressure level has been reached in said feeding line the electronic control unit 100 is arranged to send a signal to the means 130 representing data for activating the compressor 20. The means 130 for activating the compressor then activates the compressor, e.g. by engaging the clutch arrangement 30.

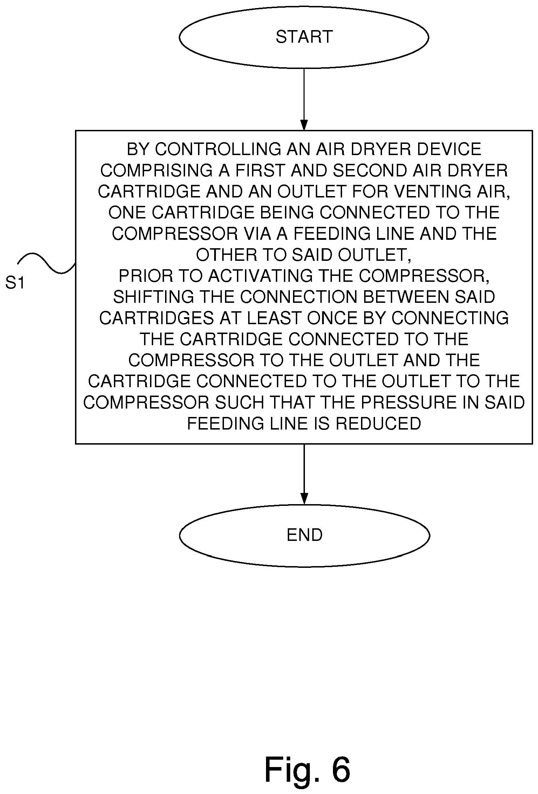

Fig. 6 schematically illustrates a block diagram of a method for controlling an air dryer device of an air pressure system. The air dryer device is configured to dry compressed air from a compressor operable by means of a drive member such as a combustion engine or an electric motor. Said air dryer comprises a first and second air dryer cartridge and an outlet for venting air. One of said cartridges is connected to the compressor via a feeding line and the other of said cartridges is connected to said outlet.

According to the embodiment the method for controlling an air dryer device of an air pressure system comprises a step S1. In this step the connection between said cartridges is shifted at least once prior to activating the compressor by connecting the cartridge connected to the compressor to the outlet and the cartridge connected to the outlet to the compressor such that the pressure in said feeding line is reduced.

According to the embodiment the method the step of shifting is performed until the pressure in the feeding line is reduced to a certain level

According to an embodiment of the method said shifting is performed based upon an original pressure in said feeding line and relevant volumes connected to said feeding line in order to reach said certain reduced pressure level.

According to an embodiment the method comprises the step of determining the pressure in said feeding line as a basis for said shifting in order to reach said certain reduced pressure level.

According to an embodiment of the method the cartridge connected to said outlet is connected to atmospheric pressure via said outlet.

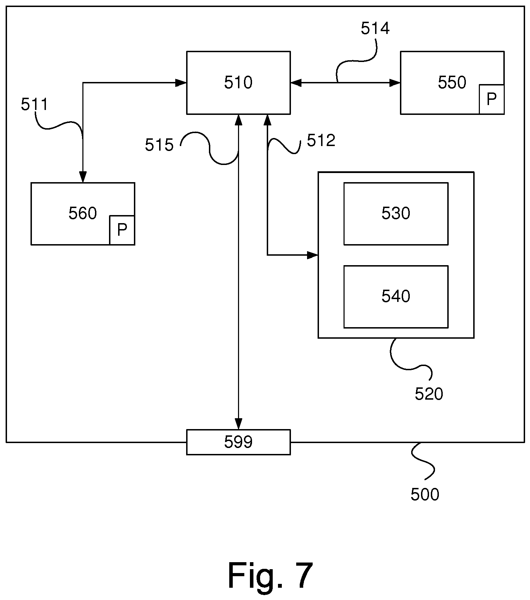

With reference to figure 7, a diagram of an apparatus 500 is shown. The control unit 100 described with reference to fig. 3 and fig. 5 may according to an embodiment comprise apparatus 500. Apparatus 500 comprises a non-volatile memory 520, a data processing device 510 and a read/write memory 550. Non-volatile memory 520 has a first memory portion 530 wherein a computer program, such as an operating system, is stored for controlling the function of apparatus 500. Further, apparatus 500 comprises a bus controller, a serial communication port, I/O-means, an A/D-converter, a time date entry and transmission unit, an event counter and an interrupt controller (not shown). Non-volatile memory 520 also has a second memory portion 540.

A computer program P is provided comprising routines for controlling an air dryer device of an air pressure system. The air dryer device is configured to dry compressed air from a compressor operable by means of a drive member such as a combustion engine or an electric motor. Said air dryer comprises a first and second air dryer cartridge and an outlet for venting air. One of said cartridges is connected to the compressor via a feeding line and the other of said cartridges is connected to said outlet. The cartridge connected to said outlet is connected to atmospheric pressure via said outlet. The program P comprises routines for determining the compressed air pressure in the respective air circuits. The program P comprises routines for shifting the connection between said cartridges at least once prior to activating the compressor by connecting the cartridge connected to the compressor to the outlet and the cartridge connected to the outlet to the compressor such that the pressure in said feeding line is reduced. The routines for shifting the connection between said cartridges is performed until the pressure in the feeding line is reduced to a certain level. The routines for shifting is performed based upon an original pressure in said feeding line and relevant volumes connected to said feeding line in order to reach said certain reduced pressure level. The program P comprises routines for determining the pressure in said feeding line as a basis for said shifting in order to reach said certain reduced pressure level. The computer program P may be stored in an executable manner or in a compressed condition in a separate memory 560 and/or in read/write memory 550.

When it is stated that data processing device 510 performs a certain function it should be understood that data processing device 510 performs a certain part of the program which is stored in separate memory 560, or a certain part of the program which is stored in read/write memory 550.

Data processing device 510 may communicate with a data communications port 599 by means of a data bus 515. Non-volatile memory 520 is adapted for communication with data processing device 510 via a data bus 512. Separate memory 560 is adapted for communication with data processing device 510 via a data bus 511. Read/write memory 550 is adapted for communication with data processing device 510 via a data bus 514. To the data communications port 599 e.g. the links connected to the control unit 100 may be connected.

When data is received on data port 599 it is temporarily stored in second memory portion 540. When the received input data has been temporarily stored, data processing device 510 is set up to perform execution of code in a manner described above. The signals received on data port 599 can be used by apparatus 500 for shifting the connection between said cartridges at least once prior to activating the compressor by connecting the cartridge connected to the compressor to the outlet and the cartridge connected to the outlet to the compressor such that the pressure in said feeding line is reduced. The shifting of the connection between said cartridges by means of said using said signals is performed until the pressure in the feeding line is reduced to a certain level. The shifting of the connection between said cartridges by means of said using said signals is performed based upon an original pressure in said feeding line and relevant volumes connected to said feeding line in order to reach said certain reduced pressure level. The signals received on data port 599 can be used by apparatus 500 for determining the pressure in said feeding line as a basis for said shifting in order to reach said certain reduced pressure level.

Parts of the methods described herein can be performed by apparatus 500 by means of data processing device 510 running the program stored in separate memory 560 or read/write memory 550. When apparatus 500 runs the program, parts of the methods described herein are executed.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A method for controlling an air dryer device (40) of an air pressure system (I), said air dryer device (40) being configured to dry compressed air (A) from a compressor (20) operable by means of a drive member (10), said air dryer device (40) comprising a first and second air dryer cartridge (42, 44) and an outlet (46a) for venting air, one of said cartridges (42, 44) being connected to the compressor (20) via a feeding line (22) and the other of said cartridges (44, 42) being connected to said outlet (46a), **characterized by** the step of:
- prior to activating the compressor (20), shifting the connection between said cartridges (42, 44) at least once by connecting the cartridge (42, 44) connected to the compressor (20) to the outlet (46a) and the cartridge (44, 42) connected to the outlet (46a) to the compressor (20) such that the pressure in said feeding line (22) is reduced.

2. A method according to claim 1, wherein the step of shifting is performed until the pressure in the feeding line (22) is reduced to a certain level (P2).

3. A method according to claim 1 or 2, wherein said shifting is performed based upon an original pressure (P1) in said feeding line (22) and relevant volumes connected to said feeding line (22) in order to reach said certain reduced pressure level (P2).

4. A method according to any of claim 1-3, comprising the step of determining the pressure in said feeding line (22) as a basis for said shifting in order to reach said certain reduced pressure level.

5. A method according to any preceding claims, wherein the cartridge (42, 44) connected to said outlet (46a) is connected to atmospheric pressure via said outlet (46a).

6. A system (I; II) for controlling an air dryer device (40) of an air pressure system (I), said air dryer device (40) being configured to dry compressed air (A) from a compressor (20) operable by means of a drive member, said air dryer device (40) comprising a first and second air dryer cartridge (42, 44) and an outlet (46a) for venting air, one of said cartridges (42, 44) being connected to the compressor (20) via a feeding line (22) and the other of said cartridges (44, 42) being connected to said outlet (46a), **characterized in that the system is configured to** prior to activating the compressor (20), shifting the connection between said cartridges (42, 44) at least once by connecting the cartridge (42, 44) connected to the compressor (20) to the outlet (46a) and the cartridge (44, 42) connected to the outlet (46a) to the compressor (20) such that the pressure in said feeding line (22) is reduced.

7. A system according to claim 6, wherein the system is configured to perform the shifting until the pressure in the feeding line (22) is reduced to a certain level (P2).

8. A system according to claim 6 or 7, wherein the system is configured to perform said shifting based upon an original pressure (P1) in said feeding line (22) and relevant volumes connected to said feeding line (22) in order to reach said certain reduced pressure level (P2).

9. A system according to any of claim 6-8, comprising means (70) for determining the pressure in said feeding line (22) as a basis for said shifting in order to reach said certain reduced pressure level (P2).

10. A system according to any of claims 6-9, wherein the cartridge (42, 44) connected to said outlet (46a) is connected to atmospheric pressure via said outlet (46a).

11. A system according to claim any of claims 6-10, wherein the compressor (20) is connectable to said drive member (10) by means of a clutch arrangement (30).

12. A vehicle (1) comprising a system (I; II) according to any of claims 6-11.

13. A computer program (P) for controlling an air dryer device (40) of an air pressure system (I), said computer program (P) comprising program code which, when run on an electronic control unit (100) or another computer (500) connected to the electronic control unit (100), causes the electronic control unit to perform the steps according to claim 1-6.

14. A computer program product comprising a digital storage medium storing the computer program according to claim 13.

## Patentansprüche

1. Verfahren zum Steuern einer Lufttrocknungsvorrichtung (40) eines Luftdrucksystems (I), wobei die Lufttrocknungsvorrichtung (40) dazu eingerichtet ist komprimierte Luft (A) von einem Kompressor (20) zu trocknen, der durch eine Antriebseinheit (10) antreibbar ist, wobei die Lufttrocknungsvorrichtung (40) eine erste und eine zweite Lufttrocknungskartusche (42, 44) und einen Auslass (46a) zum Entlüften aufweist, wobei eine der Kartuschen (42, 44) mit dem Kompressor (20) durch eine Zulaufleitung (22) verbunden ist und die andere der Kartuschen (44, 42) mit dem Auslass (46a) verbunden ist,
**gekennzeichnet durch** den Schritt:
- bevor der Kompressor (20) aktiviert wird, Tauschen der Verbindung unter den Kartuschen (42, 44) mindestens einmal, indem die Kartusche (42, 44), die mit dem Kompressor (20) verbunden ist, mit dem Auslass (46a) verbunden wird und die Kartusche (44, 42), die mit dem Auslass (46a) verbunden ist, mit dem Kompressor (20) verbunden wird, sodass der Druck in der Zulaufleitung (22) reduziert wird.

2. Verfahren nach Anspruch 1, wobei der Schritt des Tauschens umgesetzt wird, bis der Druck in der Zulaufleitung (22) auf ein bestimmtes Level (P2) reduziert ist.

3. Verfahren nach Anspruch 1 oder 2, wobei das Tauschen basierend auf einem ursprünglichen Druck (P1) in der Zulaufleitung (22) und relevanten Volumen umgesetzt wird, die mit der Zulaufleitung (22) verbunden sind, um das bestimmte reduzierte Drucklevel (P2) zu erreichen.

4. Verfahren nach einem der Ansprüche 1-3, umfassend den Schritt des Ermittelns des Drucks in der Zulaufleitung (22) als eine Basis für das Tauschen, um das bestimmte reduzierte Drucklevel zu erreichen.

5. Verfahren nach einem vorhergehenden Anspruch, wobei die Kartusche (42, 44), die mit dem Auslass (46a) verbunden ist, durch den Auslass (46a) mit Umgebungsdruck verbunden ist.

6. System (I; II) zum Steuern einer Lufttrocknungsvorrichtung (40) eines Luftdrucksystems (I), wobei die Lufttrocknungsvorrichtung (40) dazu eingerichtet ist komprimierte Luft (A) von einem Kompressor (20) zu trocknen, der durch eine Antriebseinheit antreibbar ist, wobei die Lufttrocknungsvorrichtung (40) eine erste und eine zweite Lufttrocknungskartusche (42, 44) und einen Auslass (46a) zum Entlüften aufweist, wobei eine der Kartuschen (42, 44) mit dem Kompressor (20) durch eine Zulaufleitung (22) verbunden ist und die andere der Kartuschen (44, 42) mit dem Auslass (46a) verbunden ist,
**dadurch gekennzeichnet, dass** das System dazu eingerichtet ist, bevor der Kompressor (20) aktiviert wird, die Verbindung unter den Kartuschen (42, 44) mindestens einmal zu tauschen, indem die Kartusche (42, 44), die mit dem Kompressor (20) verbunden ist, mit dem Auslass (46a) verbunden wird und die Kartusche (44, 42), die mit dem Auslass (46a) verbunden ist, mit dem Kompressor (20) verbunden wird, sodass der Druck in der Zulaufleitung (22) reduziert wird.

7. System nach Anspruch 6, wobei das System dazu eingerichtet ist das Tauschen umzusetzen, bis der Druck in der Zulaufleitung (22) auf ein bestimmtes Level (P2) reduziert ist.

8. System nach Anspruch 6 oder 7, wobei das System dazu eingerichtet ist das Tauschen basierend auf dem ursprünglichen Druck (P1) in der Zulaufleitung (22) und relevanten Volumen umzusetzen, die mit der Zulaufleitung (22) verbunden sind, um das bestimmte reduzierte Drucklevel (P2) zu erreichen.

9. System nach einem der Ansprüche 6-8, umfassend Mittel (70) zum Ermitteln des Drucks in der Zulaufleitung (22) als eine Basis zum Tauschen, um das bestimmte reduzierte Drucklevel (P2) zu erreichen.

10. System nach einem der Ansprüche 6-9, wobei die Kartusche (42, 44), die mit dem Auslass (46a) verbunden ist, durch den Auslass (46a) mit Umgebungsdruck verbunden ist.

11. System nach einem der Ansprüche 6-10, wobei der Kompressor (20) mit der Antriebseinheit (10) mittels einer Kupplungsanordnung (30) verbindbar ist.

12. Fahrzeug (1) umfassend ein System (I; II) nach einem der Ansprüche 6-11.

13. Computerprogramm (P) zum Steuern einer Lufttrocknungsvorrichtung (40) eines Luftdrucksystems (I), wobei das Computerprogramm (P) Programmcode umfasst, der dann, wenn er auf einer elektronischen Steuereinheit (100) oder einem anderen Computer (500) ausgeführt wird, der mit der elektronischen Steuereinheit (100) verbunden ist, die elektronische Steuereinheit veranlasst die Schritte nach Ansprüchen 1-6 auszuführen.

14. Computerprogrammprodukt, umfassend ein digitales Speichermedium, das das Computerprogramm nach Anspruch 13 speichert.

## Revendications

1. Procédé pour commander un dispositif dessicateur d'air (40) d'un système à air comprimé (1), ledit dispositif dessicateur d'air (40) étant configuré pour sécher l'air comprimé (A) sortant d'un compresseur (20) pouvant être actionné au moyen d'un organe d'entraînement (10), ledit dispositif dessicateur d'air (40) comprenant une première et une seconde cartouche de dessiccateur d'air (42, 44) et une sortie (46a) pour évacuer l'air, l'une desdites cartouches (42, 44) étant raccordée au compresseur (20) via un conduit d'alimentation (22) et l'autre desdites cartouches (44, 42) étant raccordée à ladite sortie (46a),
**caractérisé par** l'étape suivante :
- avant d'activer le compresseur (20), déplacer la connexion entre lesdites cartouches (42, 44) au moins une fois en raccordant la cartouche (42, 44) raccordée au compresseur (20) à la sortie (46a) et la cartouche (44, 42) raccordée à la sortie (46a) au compresseur (20) de façon à réduire la pression dans ledit conduit d'alimentation (22).

2. Procédé selon la revendication 1, dans lequel l'étape de déplacement est exécutée jusqu'à ce que la pression dans le conduit d'alimentation (22) tombe à un certain niveau (P2).

3. Procédé selon la revendication 1 ou 2, dans lequel ledit déplacement est exécuté sur la base d'une pression initiale (P1) dans ledit conduit d'alimentation (22) et de volumes correspondants raccordés audit conduit d'alimentation (22) afin d'atteindre un certain niveau de pression réduit (P2).

4. Procédé selon l'une quelconque des revendications 1 à 3, comprenant l'étape de détermination de la pression dans ledit conduit d'alimentation (22) comme base pour ledit déplacement afin d'atteindre ledit certain niveau de pression réduit.

5. Procédé selon l'une quelconque des revendications précédentes, dans lequel la cartouche (42, 44) raccordée à ladite sortie (46a) est raccordée à la pression atmosphérique via ladite sortie (46a).

6. Système (I ; II) pour commander un dispositif dessicateur d'air (40) d'un système à air comprimé (1), ledit dispositif dessicateur d'air (40) étant configuré pour sécher l'air comprimé (A) sortant d'un compresseur (20) pouvant être actionné au moyen d'un organe d'entraînement (10), ledit dispositif dessicateur d'air (40) comprenant une première et une seconde cartouche de dessicateur d'air (42, 44) et une sortie (46a) pour évacuer l'air, l'une desdites cartouches (42, 44) étant raccordée au compresseur (20) via un conduit d'alimentation (22) et l'autre desdites cartouches (44, 42) étant raccordée à ladite sortie (46a), **caractérisé en ce que le système est configuré pour,** avant d'activer le compresseur (20), déplacer la connexion entre lesdites cartouches (42, 44) au moins une fois en raccordant la cartouche (42, 44) raccordée au compresseur (20) à la sortie (46a) et la cartouche (44, 42) raccordée à la sortie (46a) au compresseur (20) de façon à réduire la pression dans ledit conduit d'alimentation (22).

7. Système selon la revendication 6, dans lequel le système est configuré pour exécuter le déplacement jusqu'à ce que la pression dans le conduit d'alimentation (22) tombe à un certain niveau (P2).

8. Système selon la revendication 6 ou 7, dans lequel le système est configuré pour exécuter ledit déplacement sur la base d'une pression initiale (P1) dans ledit conduit d'alimentation (22) et de volumes correspondants raccordés audit conduit d'alimentation (22) afin d'atteindre un certain niveau de pression réduit (P2).

9. Système selon l'une quelconque des revendications 6 à 8, comprenant des moyens (70) pour déterminer la pression dans ledit conduit d'alimentation (22) comme base pour ledit déplacement afin d'atteindre ledit certain niveau de pression réduit (P2).

10. Système selon l'une quelconque des revendications 6 à 9, dans lequel la cartouche (42, 44) raccordée à ladite sortie (46a) est raccordée à la pression atmosphérique via ladite sortie (46a).

11. Système selon l'une quelconque des revendications 6 à 10, dans lequel le compresseur (20) peut être raccordé audit organe d'entraînement (10) au moyen d'un système d'embrayage (30).

12. Véhicule (1) comprenant un système selon l'une quelconque des revendications 6 à 11.

13. Programme informatique (P) pour commander un dispositif dessicateur d'air (40) d'un système à air comprimé (1), ledit programme informatique (P) comprenant un code programme qui, lorsqu'il est exécuté sur une unité de commande électronique (100) ou un autre ordinateur (500) relié à l'unité de commande électronique (100), amène l'unité de commande électronique à exécuter les étapes selon la revendication 1 à 6.

14. Produit de programme informatique comprenant un support de stockage numérique stockant le programme informatique selon la revendication 13.
